(19) **Europäisches Patentamt / European Patent Office / Office européen des brevets**

(11) **EP 4 322 076 A1**

(12) # EUROPEAN PATENT APPLICATION

(43) Date of publication:
**14.02.2024 Bulletin 2024/07**

(21) Application number: **22190030.1**

(22) Date of filing: **11.08.2022**

(51) International Patent Classification (IPC):
**G06Q 10/04** (2023.01)   **G05B 13/02** (2006.01)
**G05D 23/00** (2006.01)   **G06N 20/00** (2019.01)
**G06Q 50/06** (2024.01)

(52) Cooperative Patent Classification (CPC):
**G06Q 10/04; G05D 23/00; G06N 20/00;
G06Q 50/06**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **VITO NV
2400 Mol (BE)**

(72) Inventors:
- **VAN OEVELEN, Tijs
  B-2400 Mol (BE)**
- **VANHOUDT, Dirk
  B-2400 Mol (BE)**
- **MIGLANI, Somil
  B-2400 Mol (BE)**

(74) Representative: **V.O.
P.O. Box 87930
2508 DH Den Haag (NL)**

(54) **A METHOD AND SYSTEM FOR CHARACTERIZING THERMAL ENERGY DISTRIBUTION IN THERMAL ENERGY EXCHANGE SYSTEMS**

(57)    A method of characterizing thermal energy distribution in a thermal energy exchange system using a data-driven model, the system having a thermal energy supply unit configured to supply heating/cooling, and a plurality of receiving units configured to consume heating/cooling supplied by said thermal energy supply unit. Connections of at least a subset of multiple receiving units to a primary supply line and a primary return line of the supply unit are modelled as respectively a single supply line and a single return line, wherein values indicative of temperature and flow rate of thermal energy exchange medium at the single supply line and the single return line are unknown to the data-driven model. An input parameter set is provided to a trained machine learning model system which is configured to output at least one prediction value, the at least one prediction value including a value indicative of a property of the thermal energy exchange system, and wherein the input parameter set includes at least a value indicative of a temperature of thermal energy exchange medium supplied by the thermal energy supply unit via the primary supply line.

FIG 1

**Description**

FIELD OF THE INVENTION

The invention relates to a method and system for characterizing thermal energy distribution in a thermal energy exchange system using a data-driven model. Further, the invention relates to a method of controlling a supply temperature of the thermal energy exchange system. Also, the invention relates to a method of controlling a heat load of one or more further receiving units. Additionally, the invention relates to a computer program product.

BACKGROUND TO THE INVENTION

Modelling of thermal energy distribution in a thermal energy exchange systems is essential for various applications or use cases, such as supply temperature control, supply temperature optimization such as supply temperature minimization, thermal supply side management, return temperature control, etc.

For supply temperature control, various approaches exist. These approaches can be based on outdoor-temperature compensation, weather compensation, and heating curves for which the supply temperature setpoint is determined as a function of the outdoor temperature. This approach assumes that higher supply temperatures are needed when the outdoor temperature is lower and vice versa. The heating curve is determined from empirical experience and established a trade-off between: supplying sufficient heat to the customers, taking into account flow rate limitations of the thermal energy distribution network in the thermal energy exchange system; and avoiding unnecessarily high supply temperatures, which would be accompanied by unnecessarily high network heat losses.

A drawback of the heating curve method is that the supply temperature setpoint is determined by the outdoor temperature only, and does not account for the actual current and future needs of the system. These depend not only on the outdoor temperature, but also on the consumer behavior and characteristics of their local thermal energy systems. Furthermore, the heating curve method focuses only on satisfying the heat demand, and minimizing heat losses. Other operational objectives like dynamic optimization of the heat supply profile are thus not enabled by this method. Sometimes supply temperature setpoints are temporarily increased/decreased manually by operators using their practical experience to overcome these drawbacks.

These manual interventions can be automated with computer-based approaches, e.g. supply temperature optimization. In these approaches the supply temperature setpoint is typically determined using numerical optimization solvers to calculate its value dynamically based on measurement data of current operational conditions, predictive mathematical models and custom objectives.

Often, white-box models are used for characterization/modelling of the thermal energy distribution in the thermal energy exchange system. Such white-box models can be derived from physical laws, using physical properties of the system. Analytical models (cf. so-called white box models), also used in digital twins, are often not suited since the system can be very complex resulting in many parameters, which tend to be difficult to determine accurately.

Often, some technical input data required for analytical or white-box models relating to network layout, thermal network arrangement, dimensions and locations of components, insulation characteristics, etc., of the thermal energy exchange system may be unavailable and/or unknown. Additionally, there may be no sensors arranged for measuring particular properties at various locations in the thermal network. Collecting that data can be very labor-intensive and/or costly, and some information is difficult to obtain or difficult to determine accurately, which can lead to inaccuracies in modelling of the system. It can be hard to collect relevant data, especially in real-time for being able to perform adequate control of the thermal energy exchange system.

For district heating systems for example, a relatively large amount of data/information needs to be available to the model. Such data may be hard to collect and may be ill-structured. Moreover, setup and maintenance of the model requires specific expertise and can be time-consuming. Furthermore, because they are based on physical principles and measurable properties, models tend to be computationally complex, i.e. large number of equations and variables. This is not convenient for, for example, optimal control purposes where models should be fast to simulate. There is a strong desire to improve the characterization of thermal energy distribution in thermal energy exchange systems, especially for relatively complex systems.

Since using these analytical models is complex, it can be advantageous to employ empirical models (cf. black-box models) which can utilize machine learning models (e.g. regression models) for making predictions. Such models may for example model a supply temperature propagation from heat production site to monitored buildings, a return temperature propagation from all buildings to heat production site, a lumped flow rate of the unmonitored buildings, etc. A data-driven trained model can be derived from measurement data using mathematical regression techniques. Hybrid models (grey-box) are also employed in some cases, wherein model equations are inspired by physical laws, but with model parameters determined to fit measurement data.

SUMMARY OF THE INVENTION

It is an object of the invention to provide for a method and a system that obviates at least one of the above mentioned drawbacks.

Additionally or alternatively, it is an object of the invention to improve the characterization of thermal energy distribution in a thermal energy exchange system.

Additionally or alternatively, it is an object of the invention to more efficiently model a thermal energy exchange system for the purpose of control of the thermal energy exchange system, such as for example supply temperature control, thermal supply side management, etc.

Thereto, the invention provides for a computer implemented method of characterizing thermal energy distribution in a thermal energy exchange system using a data-driven model, the thermal energy exchange system comprises a thermal energy supply unit configured to supply heating/cooling, and a plurality of receiving units configured to consume heating/cooling supplied by said thermal energy supply unit, wherein the thermal energy supply unit is connected to a primary supply line through which thermal energy exchange medium flows from the thermal energy supply unit towards the plurality of receiving units, wherein the thermal energy supply unit is connected to a primary return line through which thermal energy exchange medium from the plurality of receiving units flows towards the thermal energy supply unit, wherein connections of at least a subset of multiple receiving units to the primary supply line and the primary return line are modelled as respectively a single supply line and a single return line, wherein values indicative of temperature and flow rate of thermal energy exchange medium at the single supply line and the single return line are unknown to the data-driven model, wherein the method includes providing an input parameter set to a trained machine learning model system which is configured to output at least one prediction value, the at least one prediction value including a value indicative of a property of the thermal energy exchange system, and wherein the input parameter set includes at least a value indicative of a temperature of thermal energy exchange medium supplied by the thermal energy supply unit via the primary supply line.

Advantageously, the method can effectively handle the case in which various receiving units have connections in the thermal network with unknown/unmonitored parameters (e.g. temperature and/or flow rate). The thermal network of the thermal energy exchange system may include various pipes, units and subsystems that are arranged to enable thermal energy exchange. The method can also be employed in cases where the receiving units have no known/monitored parameters, e.g. all unmonitored receiving units.

The thermal energy distribution in the thermal energy exchange system is at least partly dependent on data (e.g. temperatures of thermal energy exchange medium) that is unknown/unavailable to the machine learning model at connections or points within the thermal energy exchange system. For example, the unknown/unavailable data may be return temperatures at unmonitored connections of receiving units. The term "unmonitored" may indicate that it is not monitored by the model or that relevant data is unavailable and/or unknown. For example, for supply temperature control, a data-driven trained machine learning model can be employed to model the effect of supply temperature on the heating/cooling supply side on the return temperature of said heating/cooling supply side. The thermal energy exchange system can be modelled such that the subset of receiving units are lumped together, and their connections to the primary supply line and the primary return line can be bundled as the single supply line and the single return line, respectively.

The single supply line may model flow of thermal energy exchange medium from the thermal energy supply unit towards the subset of multiple receiving units, and the single return line may model flow of thermal energy exchange medium from the subset of multiple receiving units towards the thermal energy supply unit. In some examples, the subset of receiving units do not have metered connections available to the model.

The method can be applied with very little requirements on the case to which it is applied: it only requires data of a small number of parameters. Data of other parameters and other information is not necessary. Even if such data or information could be available, time and effort can be saved in characterization of the thermal energy exchange system by not needing to manage (request, gather, process, store) these.

The invention enables an improved operational control of the thermal energy exchange system using the data-driven model.

Different control objectives may be employed, such as for example supply temperature minimization or heat supply optimization. For example, heat supply optimization may relate to improvement of any thermal-hydraulic property related to the heat supply unit. The property may for instance be heat load, return temperature, flow rate, heat production cost, greenhouse gas emissions etc. In some examples, other thermal-hydraulic properties can be calculated using the return temperature, supply temperature and/or flow rate.

The method enables predicting the effect of control variables on the control objectives, which provides information to determine the setpoints and/or control signals that should be applied to the real thermal energy exchange system.

The data-driven model or machine learning model has been built using historic data. The model may be trained using training data. Model parameter configuration can be automated, without a need for manual configuration, which typically can be labor intensive. Model configuration relies on historic measurement data instead of detailed information about system components. The former can be collected easily from the same sensors as needed for control.

A district heating system comprising a thermal network may include one or more supply units (e.g. thermal plant) and receiving units (e.g. consumer units such as buildings). However, there may also be intermediate exchange units (e.g. "substations" in which heat exchangers are housed). Such intermediate exchange unit may for example have a heat exchanger with a primary side and a secondary side. Physical separation between fluid flowing on either side may be provided. For instance, heat/cooling on the primary side can be exchanged to the secondary side of the intermediate exchange unit. It will be appreciated that such intermediate units may be considered receiving units in some examples. A receiving unit can be consumer unit and/or an intermediate unit between supply side and another intermediate unit or a consumer unit. However, in some examples, such intermediate units are not modelled. For example the supply side may be indirectly connected to end receiving units via one or more intermediate units such as heat exchangers.

The thermal energy receiving units can be understood as elements in the thermal system that receive the heat, either for direct use or for further distribution, e.g. building/apartment connections and/or network substation (intermediate exchange unit).

Heat supply units can be understood as elements that deliver heat to the thermal energy exchange system. These could be heat production units such as, but not restricted to, boilers (on gas, oil, biomass, fuel, ...), heat pumps, combined heat and power units (CHPs). Furthermore, in some examples, they could be heat transfer units that transfer heat coming from other thermal energy exchange systems, either hydraulically connected or not, using heat exchangers or not.

For supply temperature propagation, a supply temperature machine learning model (e.g. regressor) can be employed for predicting an outlet temperature of the primary supply line using the inlet temperature of the primary supply line. The data-driven model is not only usable for calculating the propagation of the supply temperature, but also to predict the best supply temperature for the system according to an objective.

For example for supply temperature control/optimization, the physical behaviour of the network plays an important role (partly because time delays occur). According to the method of the invention, it is not needed to have a priori technical information about layout, location, diameters, length, insulation characteristics, the arrangement of the thermal network, etc.

In some examples, a supply temperature control can be performed for example based on an energy peak shaving control objective. The method of the invention may be used to characterize/model the supply temperature propagation from supply side (cf. thermal energy supply unit) to the demand side (cf. receiving units), how the return temperature propagates back to the supply side, the effect of supply temperature on return temperatures and/or flow rates coming from the receiving units, etc.

For supply temperature control where the control objective is supply temperature minimization (may be referred to by supply temperature minimization), it may be needed to predict the supply temperature at monitored locations to allow reducing the inlet supply temperature, while respecting limits on the outlet supply temperature. For supply-side management, the control objective is optimization of the dynamic heat supply profile, it may be needed to predict the return temperature and flow rate at the heat supply unit, depending on the choice of supply temperature, where this temperature and flow rate are affected by both known/monitored and unknown/unmonitored connections. In specific cases, only one of temperature or flow rate, or another quantity (e.g. heat load) could be sufficient.

In some examples, a heat load management could be performed, as long as control constraints on supply temperature are defined, e.g. based on outdoor temperature. However, for supply temperature minimization, at least one "control point" and thus monitored receiving unit may be required.

Optionally, the value indicative of the property of the thermal energy exchange system is at least one of: a value indicative of a return temperature of thermal energy exchange medium provided to the thermal energy supply unit via the primary return line; or a value indicative of a flow rate of thermal energy exchange medium at the single supply line, at the single return line, at the primary supply line and/or at the primary return line.

The return temperature is a function of individual temperatures of thermal energy exchange medium leaving the plurality of receiving units towards the thermal energy supply unit. The return temperature is often a crucial variable affecting the efficiency, cost and/or sustainability of the heat supply. For example, heat supply units relying on combustion processes have a higher fuel efficiency when lower return temperatures allow condensation of the flue gasses. For example, geothermal heat sources allow higher production capacity when the return temperature is lower, reducing payback time on capital investments.

In order to improve characterization of the system, a mass balance in the entire network may be calculated. For the mass balance, it may be needed to find the flows that go away from one point into the rest of the branches in the thermal network.

Flow rates in the thermal network in general have a strong effect on the travel time of the heating medium flow through the network. This causes a time delay which strongly affects the propagation of temperatures through the network. Being able to predict flow rates in the system in general, and specifically those measured or identifiable at connections to the network, enables better prediction of other relevant variables.

Furthermore, the instantaneous thermal power of a heat supply unit is dependent on the return temperature and flow rate. This makes it specifically relevant to be able to predict those values.

Optionally, the input parameter set includes a value related to a heat load of the receiving units.

In some examples, the heat load of the receiving units is not used as a direct input, as they may be unknown at least for the subset of receiving units. Instead, known values can be used that are useful to predict the heat load, without taking the intermediate step of predicting heat load to be used as input for another model. However, in some examples, the heat load is predicted by a heat load predictor model (e.g. a further trained machine learning model).

The heat load of individual receiving units, or of aggregated sets of receiving units, is a variable that has a strongly determining effect on the flow rates and return temperatures in the thermal network. If representative values can be provided as input to the method, this improves the quality of prediction.

Optionally, the value related to the heat load of the receiving units is calculated based on a value indicative of time, such as the time of the day.

Optionally, the value related to the heat load of the receiving units is calculated based on a value indicative of the weather, such as an outdoor temperature.

The return temperature on the supply side may depend on the heat demand of the receiving units and the supply temperature that can be measured at the receiving units. Heat demand can be linked to weather (e.g. weather forecast, outdoor temperature, humidity, etc.) and time (e.g. time of day, day of the week).

Heat demand can be correlated with the weather. Outside temperature for example can be one of the most important parameters that influences the heat demand. Hot water use (e.g. by showers, heating systems that are turned off at night, etc.) is often related to the time of day. Heat demand therefore not only depends on the outside temperature, but also varies according to the time of the day. Day of the week can also have an influence (e.g. weekend, holidays, etc.).

Using values related to weather and/or time as inputs to the method therefore allows more accurate predictions that capture better the intrinsic variations in the operation of the thermal distribution system.

Optionally, the system is provided with one or more further receiving units having individual supply and return lines connected to respectively the primary supply and return lines, wherein a temperature and/or a flow rate of thermal energy exchange medium at said individual supply and return lines are known to the model.

Optionally, the at least one prediction value further includes a value indicative of a supply temperature of thermal energy exchange medium at the individual supply lines of the further receiving units.

Optionally, the input parameter set includes at least one of: a value indicative of a flow rate of thermal energy exchange medium at the individual supply and/or return lines of the further receiving units; a value indicative of the flow rate of thermal energy exchange medium at the primary supply line and/or the primary return line; or a value indicative of a return temperature at the individual supply and/or return lines of the further receiving units.

Optionally, the flow rate of thermal energy exchange medium at the primary supply line and/or the primary return line is calculated based on the value indicative of the flow rate of thermal energy exchange medium at the single supply line and/or at the single return line.

Optionally, one or more previous prediction values are provided in the input parameter set.

Optionally, the value indicative of the temperature of thermal energy exchange medium supplied by the thermal energy supply unit via the primary supply line is indirectly measured using a measured temperature of thermal energy exchange medium in individual supply lines of the further receiving units.

Optionally, the input parameter set includes a value indicative of heat load of the further receiving units, flow rate at the further receiving units and/or return temperature of the further receiving units.

According to an aspect, the invention provides for a system for characterizing thermal energy distribution in a thermal energy exchange system using a data-driven model, the thermal energy exchange system comprises a thermal energy supply unit configured to supply heating/cooling, and a plurality of receiving units configured to consume heating/cooling supplied by said thermal energy supply unit, wherein the thermal energy supply unit is connected to a primary supply line through which thermal energy exchange medium flows from the thermal energy supply unit towards the plurality of receiving units, wherein the thermal energy supply unit is connected to a primary return line through which thermal energy exchange medium flows from the plurality of receiving units towards the thermal energy supply unit, wherein connections of at least a subset of multiple receiving units to the primary supply line and the primary return line are modelled as respectively a single supply line and a single return line, wherein values indicative of temperature and flow rate of thermal energy exchange medium at the single supply line and the single return line are unknown to the data-driven model, wherein the system includes a processor configured to providing an input parameter set to a trained machine learning model system which is configured to output at least one prediction value, the at least one prediction value including a value indicative of a property of the thermal energy exchange system, and wherein the input parameter set includes at least a value indicative of a temperature of thermal energy exchange medium supplied by the thermal energy supply unit via the primary supply line.

The system can be employed to perform supply temperature control of thermal networks, such as for instance supply temperature minimization, supply-side management (heat load, temperatures, prices, operating constraints). By employing the data-driven modeling, model parameter configuration can be automated. There may be no need for manual configuration, which requires time investment by an expert. Model configuration relies on historic measurement data instead of detailed information about system components. The former can be collected easily from the same sensors as needed for control, whereas the latter requires communication between solution provider and the user. Furthermore, such information is likely scattered and hard to collect. The method may also accurately calculate/predict flow rate of unmonitored receiving units (e.g. buildings or other consumer units).

Optionally, the system is used for control of one or more receiving units. Hence, the system can be employed for demand-side management.

The machine learning model can be trained by collecting historical sensor data which is used as training data. One or more test campaigns may be carried out for the purpose of training the data-driven model.

According to an aspect, the invention provides for a computer implemented method of controlling a supply temperature of the thermal energy exchange system, wherein at least one prediction value associated to the thermal energy exchange system is predicted using the method according to the invention, and wherein control of the supply temperature of the thermal energy exchange system is performed based on predetermined target objectives and the at least one prediction value.

Supply temperature control is one element of the operational control system in district heating thermal networks. The objective of this sub-system is to determine an improved setpoint (cf. optimization) for the supply temperature provided by the heat production unit(s), i.e. the temperature of the heat exchange medium at the primary supply line. The optimal supply temperature setpoint is dependent on the real-time conditions and requirements from the receiving units (e.g. customer/consumer requirements). In addition to the primary goal of ensuring that the thermal demands can be satisfied, this would allow to reach secondary goals such as for example supply temperature minimization, i.e. reducing the temperature in the supply pipes also reduces the heat loss of these pipes to the environment, and/or activating district heating network flexibility, since dynamic control of the supply temperature allows a partial decoupling between the heat demand (determined by customers) profile and heat supply (delivered by the heat production unit) profile. This allows shaping the heat supply profile to optimize the heat production processes (e.g. cost/revenue optimization, GHG emission reduction).

In some examples, a supervisory control system is employed for supply temperature control, possibly integrated with control of other operational variables, that is capable of determining the optimal (with respect to a predetermined control objective) supply temperature dynamically, i.e. as a function of time and with continuous feedback of the actual conditions in the district heating system. The method according to the invention is used to accurately and effectively model/predict the flow rates and temperatures in the thermal network.

According to an aspect, the invention provides for a computer implemented method of controlling a heat load of one or more further receiving units, wherein at least one prediction value associated to the thermal energy exchange system is predicted using the method according to the invention, and wherein control of the heat load of one or more further receiving units is performed based on predetermined target objectives and the at least one prediction value.

It will be appreciated that a receiving unit such as a building may refer to a connection in the thermal network of the system. It doesn't strictly need to be a building or even a consumer unit. It can be any (sub)system element that draws flow rate out of the supply line and returns it in the return line. The receiving unit may for instance also be a substation that serves one or more receiving units such as buildings, connections to a downstream thermal network, etc. A "connection" may be understood as an interface between lines (e.g. pipes) corresponding to a primary and secondary network respectively. This interface could be characterized by ownership, responsibility, network topology/hierarchical construction, measurement location, with or without physical line/pipe joints.

It will be appreciated that a "monitored connection" may refer to a connection for which at least a supply temperature measurement is available to the model. Connections that do not satisfy the definition of the "monitored connection" can be considered as "unmonitored connections". According to the invention, unmonitored connections are not identified individually and only modelled in a lumped fashion.

In some examples, the receiving units are not directly modelled, but the distribution of heat through the thermal network, including the receiving units, is modelled. The thermal network can have various configurations.

The machine learning model may have various inputs/outputs. Input data can be provided to the model, and output data is provided as output by the model. It will be appreciated that mentioned inputs and outputs may define only the variables used, without detailing whether this concerns past, current or future values.

It will be appreciated that any of the aspects, features and options described in view of the method apply equally to the system and the described computer program product. It will also be clear that any one or more of the above aspects, features and options can be combined.

BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.
In the drawing:

Fig. 1 shows a schematic diagram of an exemplary embodiment of a thermal energy exchange system; and
Fig. 2 shows a schematic diagram of an exemplary method.

DETAILED DESCRIPTION

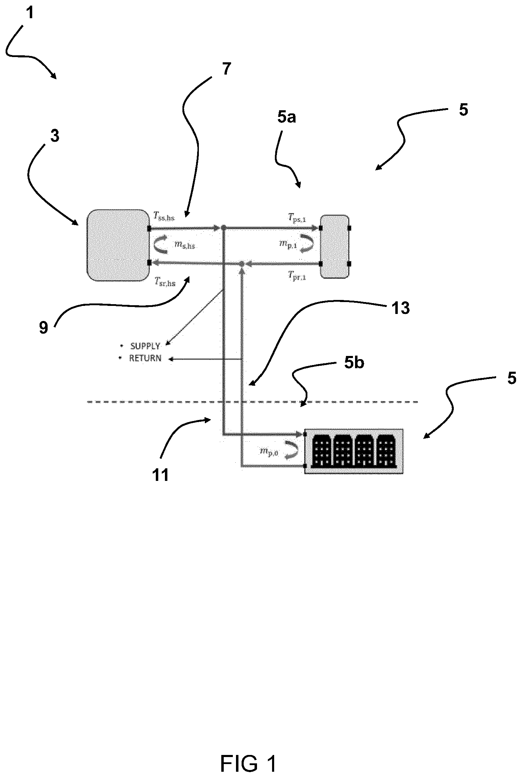

Fig. 1 shows a schematic diagram of an exemplary embodiment of a thermal energy exchange system 1. In this example, the system 1 is a district heating (cf. collective heating) system comprising a thermal network. Such network can be very complex, and only a simplified representation is shown for illustrating the method according to the invention.
According to the disclosure, thermal energy distribution in the thermal energy exchange system is characterized utilizing a machine learning model. The thermal energy exchange system 1 comprises a thermal energy supply unit 3 configured to supply heating/cooling. Furthermore, the system 1 includes a plurality of receiving units configured to consume heating/cooling supplied by said thermal energy supply unit 3. In this example, the system 1 includes a plurality of unmonitored connections 5b, and a plurality of optional monitored connections 5a. However, in some examples, only unmonitored connections 5b are available.
The thermal energy supply unit 3 is connected to a primary supply line 7 through which thermal energy exchange medium flows from the thermal energy supply unit 3 towards the plurality of receiving units 5. The thermal energy supply unit 3 is connected to a primary return line 9 through which thermal energy exchange medium from the plurality of receiving units 5 flows towards the thermal energy supply unit 3. Connections 5b of at least a subset of multiple receiving units 5 to the primary supply line 7 and the primary return line 9 are modelled as respectively a single supply line 11 and a single return line 13, wherein values indicative of temperature and flow rate of thermal energy exchange medium at the single supply line 11 and the single return line 13 are unknown to the data-driven model. The method includes providing an input parameter set to a trained machine learning model system which is configured to output at least one prediction value, the at least one prediction value including a value indicative of a property of the thermal energy exchange system 1, and wherein the input parameter set includes at least a value indicative of a temperature of thermal energy exchange medium supplied by the thermal energy supply unit 3 via the primary supply line 7.
In some examples, the value indicative of the property of the thermal energy exchange system is at least one of: a value indicative of a return temperature of thermal energy exchange medium provided to the thermal energy supply unit via the primary return line; or a value indicative of a flow rate of thermal energy exchange medium at the single supply line, at the single return line, at the primary supply line and/or at the primary return line.
The method according to the invention can be used in conjunction with various use cases. Some examples are provided below. It will be appreciated that in various examples it is also envisaged that a cooling supply unit is provided instead of a heat supply unit. Hence, whenever "heat" is mentioned, it may be "cooling" in some alternative examples. It is also envisaged that the system is switchable between a heating state and a cooling state.
The modelling/characterization method can be used in conjunction with a supply temperature control. The variable for supply temperature control may be heat supply unit's supply temperature.
In some examples, a supply temperature minimization is carried out. The control objective can be seen as minimization of the heat supply unit's supply temperature, while respecting a minimum supply temperature at specific downstream locations. The system may have at least one heat supply unit, at least one "monitored" heat receiving unit, and a thermal network with at least a supply and a return line/pipe, connecting the at least one heat supply unit with the at least one "monitored" heat receiving unit. The output of the model may be the (supply) temperature in at least one downstream line location, indicative of the (supply) temperature requirement of heat receiving unit(s). The input to the model can be the heat supply unit's supply temperature. It will be appreciated that "monitored heat receiving unit" may be understood as any heat receiving unit for which an indicative supply temperature is available/known/used to/by the model.
For supply temperature minimization, a supply temperature can be chosen as low as possible, such that supply temperature at the receiving units is maintained above a minimum threshold.
The system may have at least a plurality of "unmonitored" (i.e. unknown/unavailable to the model) heat receiving units.
Optionally, the system has additional "monitored" heat receiving units.
Additionally or alternatively, the system includes additional heat supply units.
In some examples, the output is indicative of a supply temperature at additional "monitored" heat receiving units. Additionally or alternatively, the output is indicative of a flow rate at heat supply unit and/or at additional heat supply units. The flow rate at the heat supply unit (assuming it is the only heat supply unit) is the sum of: Flow rates of all monitored heat receiving units: assumed to be predicted externally, and a lumped flow rate of all unmonitored heat receiving units, which can be advantageously predicated using the machine learning model. Additionally or alternatively, the output is indicative of the total flow rate (sum of flow rates) of the unmonitored heat receiving units.

In some examples, the input is indicative of a flow rate at the heat supply unit and/or at additional heat supply units. Additionally or alternatively, the input is indicative of the flow rate at location receiving units and/or at additional "monitored" heat receiving units. Additionally or alternatively, the input is indicative of the total flow rate (sum of flow rates) of the unmonitored heat receiving units. Additionally or alternatively, the input is indicative of supply temperature at the receiving units and/or at additional heat receiving units. Additionally or alternatively, the input is indicative of the supply temperature of the additional heat supply units. Additionally or alternatively, the input is indicative of the ambient/environment variables such as ground temperature(s). Additionally or alternatively, the input is indicative of weather variables such as outdoor air temperature(s). Additionally or alternatively, the input is indicative of time: e.g. time of day, day of week, day of year.

According to the invention, there is distinction between heat receiving units whether or not the supply temperature is monitored. The flow rates in the system can be optional inputs for the modeling. The accuracy of the modelling/characterization can be significantly improved by taking the flow rates also into account. For the subset of heat receiving units, the flow rate can be predicted not individually, but is predicted collectively.

Additionally or alternatively, the modelling/characterization method can be used for heat supply optimization. In this case, the control objective may be improvement of any thermal-hydraulic property related to the heat supply unit, such as for example heat load, return temperature, flow rate. The method may be used for any thermal-hydraulic property that in order to be calculated requires data indicative of the return temperature and/or flow rate.

The system may have at least one heat supply unit, at least a plurality of unmonitored heat receiving unit, and optionally one or more monitored heat receiving units.

The output(s) may be indicative of a thermal-hydraulic property at the heat supply unit, such as for example at least one of a return temperature at the primary return line; and/or flow rate at the primary supply line; and/or any other thermal-hydraulic property which is dependent on the return temperature and/or flow rate, such as for example heat load, which is the rate of energy delivered by the heat supply unit per unit of time, $(Q = m{*}cp{*}(Tsup-Tret))$; and/or primary energy consumption of a heat supply unit (e.g. $PE = Q$ /efficiency, where efficiency could be dependent on Tsup and/or Tret).

The input(s) may be indicative of supply temperature at heat supply unit at the primary supply line.

Optionally, the system may include additional heat receiving units and/or additional heat supply units. In some examples, the output is indicative of a supply temperature at one or more "monitored" heat receiving units. Additionally or alternatively, the output is indicative of a flow rate at heat supply unit (at the primary return line or at the primary supply line) and/or at additional heat supply units. Additionally or alternatively, the output may be indicative of the total flow rate, i.e. sum of flow rates, of the unmonitored heat receiving units.

In some examples, the input is indicative of a supply temperature at one or more "monitored" heat receiving units. Additionally or alternatively, the input is indicative of return temperature at one or more "monitored" heat receiving units. Additionally or alternatively, the input is indicative of a flow rate at heat supply unit (at the primary supply line or primary return line) and/or at additional heat supply units. Additionally or alternatively, the input is indicative of a flow rate at one or more "monitored" heat receiving units. Additionally or alternatively, the input is indicative of the total flow rate (sum of flow rates) of the unmonitored heat receiving units. Additionally or alternatively, the input is indicative of the supply temperature of the additional heat supply units. Additionally or alternatively, the input is indicative of ambient variables such as ground temperature(s). Additionally or alternatively, the input is indicative of weather variables such as outdoor air temperature(s). Additionally or alternatively, the input is indicative of time: e.g. time of day, day of week, day of year. Additionally or alternatively, the input is indicative of the thermal-hydraulic property at the heat supply unit.

For specific objectives, it may be required to be able to predict the flow rate at the heat supply unit. It can be preferred so as to improve the accuracy of the model predictions. This could be predicted directly, or as the sum of flow rates of all heat receiving units. In the latter case, some individual flow rates may be predicted using methods known in the art, whereas others may need to be predicted collectively as part of the method according to the invention.

The modelling method can be used for demand side management. The variable for demand side management may be the heat load of the heat receiving unit(s) of the system.

The system may include at least one heat supply unit, and at least one "controllable" heat receiving unit. The outputs may be the same as for heat supply optimization. For example, the outputs may be indicative of a thermal-hydraulic property at the heat supply unit, such as for example a return temperature at the primary return line, and/or a flow rate at the primary return line or at the primary supply line, and/or any other thermal-hydraulic property which is dependent on the return temperature and/or flow rate (e.g. heat load which can be defined as the rate of energy delivered by the heat supply unit per unit of time).

The inputs may be indicative of the heat load (thermal power) of the at least one controllable heat receiving. Additionally or alternatively, the input may be indicative of the primary flow rate, primary return temperature, secondary supply temperature, outdoor temperature offset, etc.

**Modelling example**

District heating network configured to transport heat exchange medium between the heat production site(s) and heat consumer(s). The following assumptions are made in this example: single heat production site; one or more heat consumers with measured supply and return temperatures and flow rate; one or more heat consumers without full measurement of supply and return temperatures and flow rate available (to the model).

In this example, the district heating network model comprises the following sub-models:

1. Prediction of the lumped flow rate of the unmonitored connections $\dot{m}_{p,0}$
2. Prediction of the flow rate from and to the heat production site $\dot{m}_{s,hs}$
3. Prediction of the supply temperature on the primary side of each monitored connection $T_{ps,i}$, i.e. propagation of temperature through the supply network
4. Prediction of the return temperature on the secondary side of the heat production site $T_{sr,hs}$, i.e. propagation of temperature through the return network

The second sub-model represents the conservation of mass in the district heating network:

$$\dot{m}_{s,hs} = \sum_{i=1}^{N_c} \dot{m}_{p,i} + \dot{m}_{p,0} = \sum_{i=0}^{N_c} \dot{m}_{p,i} \qquad (1.1)$$

In case there is only one monitored connection:

$$\dot{m}_{s,hs} = \dot{m}_{p,0} + \dot{m}_{p,1} \qquad (1.2)$$

The other relationships are modeled empirically using data from historic measurements. This yields explicit expressions for the concerning output variables, also referred to as "forecasters", "regression models", "regressors", "black-box models" or "machine learning models". The choice of the input variables is discussed first. The functional form that relates the inputs to the outputs of these regressors is discussed afterwards.

Note that the following conversion relations between mass flow rates and volume flow rates hold, where $\rho$ is the mass density of the water in the pipes:

$$\dot{m}_{s,hs} = \rho F_{s,hs} \qquad (1.3)$$

$$\dot{m}_{p,1} = \rho F_{p,1} \qquad (1.4)$$

$$\dot{m}_{p,0} = \rho F_{p,0} \qquad (1.5)$$

Input variables

The regression models may use several input variables, involving data from the previous time step(s) up to $N_p$ past time steps.

Regressor for the lumped flow rate of the unmonitored connections may include:

$$F_{\text{p},0,k+1} = f_{\text{ufr}} \begin{pmatrix} F_{\text{p},0,k-N_{\text{p}}+1}, \dots, F_{\text{p},0,k}, \\ T_{\text{ss,hs},k-N_{\text{p}}+1}, \dots, T_{\text{ss,hs},k}, \\ T_{\text{o,fc},k-N_{\text{p}}+1}, \dots, T_{\text{o,fc},k}, \\ h_{\text{d},k-N_{\text{p}}+1}, \dots, h_{\text{d},k}, \\ m_{\text{h},k-N_{\text{p}}+1}, \dots, m_{\text{h},k}, \end{pmatrix} \tag{1.6}$$

Previous values of the output variable $F_{\text{p},0}$ are used as input to account for inertial effects. In some examples, only the previous value and not older values are used.

The flow rate of each individual unmonitored connection is considered to be dependent on the primary supply temperature and the heat load of the substation:

○ The primary supply temperature is not directly measured, but is considered to be dependent on the heat generation supply temperature $T_{\text{ss,hs}}$. The primary supply temperature may also be dependent on the flow rates of exemplary monitored buildings. In some examples, the regressor for Fp,0 can be replaced by a regressor for Fs,hs directly (incorporating the mass conservation directly). This would be enabled by the availability of the monitored flow rates as input features.

○ The heat load is not measured, but considered to be time-dependent and empirically correlated to the weather. These are represented in a simplified way by hour of the day $h_{\text{d}}$, minute of the hour $m_{\text{h}}$ and outdoor temperature $T_{\text{o,fc}}$.

The total flow rate of all unmonitored connections can be therefore assumed to be dependent on the same input variables as the individual connections

Regressor for the supply temperature of connection 1:

$$T_{\text{ps},1,k+1} = f_{\text{st}} \begin{pmatrix} T_{\text{ps},1,k-N_{\text{p}}+1}, \dots, T_{\text{ps},1,k}, \\ T_{\text{ss,hs},k-N_{\text{p}}+1}, \dots, T_{\text{ss,hs},k}, \\ F_{\text{p},1,k-N_{\text{p}}+1}, \dots, F_{\text{p},1,k}, \\ F_{\text{p,hs},k-N_{\text{p}}+1}, \dots, F_{\text{p,hs},k}, \end{pmatrix} \tag{1.7}$$

The following physical phenomena are assumed to take place:

○ Convective time delay:

▪ Time delay determined by the velocities (flow rates) in the pipe sections passed in the trajectory between heat supply unit and connection 1. It is assumed that knowledge of $F_{\text{p},1}$ and $F_{\text{s,hs}}$ is sufficient, i.e. that the internal distribution of flow rates within the set of unmonitored connections doesn't play a significant role. Under this assumption, the flow rate in every (intermediate) pipe in the network may depend directly on the available data.
▪ Inlet temperature $T_{\text{ss,hs}}$ in the past

○ Thermal inertia of the heating medium and pipe walls:

▪ Outlet supply temperature $T_{\text{ps},1,k}$ acts as as state variable, which "memorizes" the previous state

○ Heat loss of pipe walls to the environment:

▪ No explicit ground temperature variable included in the data or the model
▪ However, if heat loss takes place in practice, this will be reflected in the parameters of the model, such that the outlet temperature will be lower than the inlet temperature

Regressor for the return temperature of the heat supply unit:

$$T_{\mathrm{sr,hs},k+1} = f_{\mathrm{rt}} \begin{pmatrix} T_{\mathrm{sr,hs},k-N_{\mathrm{p}}+1}, \cdots, T_{\mathrm{sr,hs},k}, \\ T_{\mathrm{pr},1,k-N_{\mathrm{p}}+1}, \cdots, T_{\mathrm{pr},1,k}, \\ F_{\mathrm{p},1,k-N_{\mathrm{p}}+1}, \cdots, F_{\mathrm{p},1,k}, \\ F_{\mathrm{p,hs},k-N_{\mathrm{p}}+1}, \cdots, F_{\mathrm{p,hs},k}, \\ T_{\mathrm{ss,hs},k-N_{\mathrm{p}}+1}, \cdots, T_{\mathrm{ss,hs},k}, \\ T_{\mathrm{o,fc},k-N_{\mathrm{p}}+1}, \cdots, T_{\mathrm{o,fc},k}, \\ h_{\mathrm{d},k-N_{\mathrm{p}}+1}, \cdots, h_{\mathrm{d},k}, \\ m_{\mathrm{h},k-N_{\mathrm{p}}+1}, \cdots, m_{\mathrm{h},k}, \end{pmatrix} \qquad (1.8)$$

The same physical phenomena as in the supply network take place in the propagation of the return temperature from connection 1 back to the heat supply unit network.

In addition, there is also a mix-in from the return temperatures coming from the unmonitored connections. However, these return temperatures are not directly measured. It is assumed that they depend on the same variables as the lumped flow rate of unmonitored connections.

The number of past time steps $N_{\mathrm{p}}$ used can be based on data analysis involving (partial) autocorrelation functions, focusing on the supply temperature propagation problem. It was found that the outlet supply temperature depends at most on the previous n time steps of the inlet supply temperature. It will be appreciated that n is case-dependent (e.g. 5 or 6 time steps of 10 minutes, however various other values can be employed). The same or a different number could be used for all other input variables and regression models.

Approach for extension to more than one monitored buildings:

In some examples, for the regressor for lumped flow rate of unmonitored buildings, the flow rate $F_{\mathrm{p},i}$ of each monitored building i can be added as additional input (also optionally past values).

Regressor for supply temperature:

∘ For each monitored connection i, the inputs can be

- $T_{\mathrm{ps},i}$: recent $N_{\mathrm{p}}$ values
- $T_{\mathrm{ss,hs}}$: recent $N_{\mathrm{p}}$ values
- $F_{\mathrm{p},j}$: recent $N_{\mathrm{p}}$ values for each monitored connection j (including i itself)
- $F_{\mathrm{p,hs}}$: recent $N_{\mathrm{p}}$ values

- Regressor for return temperature:
  ∘ For each monitored connection i, the following inputs can be included:

  - $T_{\mathrm{pr},i}$: recent $N_{\mathrm{p}}$ values
  - $F_{\mathrm{p},i}$: recent $N_{\mathrm{p}}$ values

Note, it is in principle also possible to model an entire network without monitored connections using variants of the machine learning models (e.g. regressors) for the unmonitored flow rate and the return temperature.

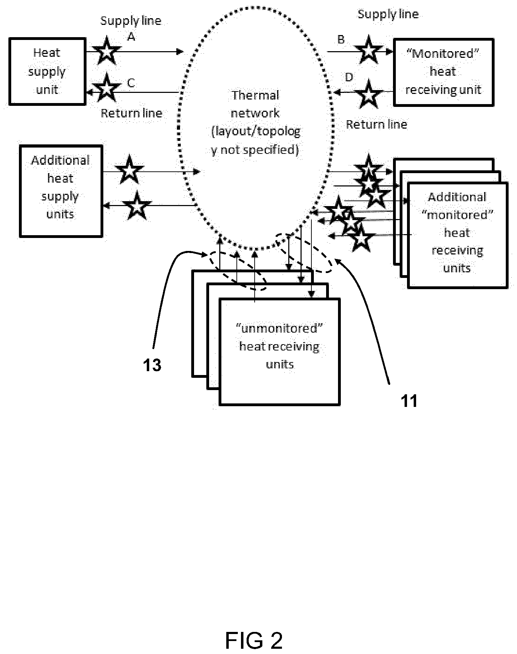

Fig. 2 shows a schematic diagram of an exemplary method of characterizing thermal energy distribution in a thermal energy exchange system using a machine learning model. The thermal energy exchange system includes a thermal network with a particular layout/topology which is unknown. The thermal energy supply unit(s) supply heating/cooling, and a plurality of receiving units consume heating/cooling supplied by said thermal energy supply unit. The thermal energy supply unit is connected to a primary supply line through which thermal energy exchange medium flows from the thermal energy supply unit towards the plurality of receiving units. The thermal energy supply unit is connected to a primary return line through which thermal energy exchange medium from the plurality of receiving units flows towards the thermal energy supply unit. Connections of at least a subset of multiple receiving units to the primary supply line and the primary return line are modelled as respectively a single supply line 11 and a single return line 13, wherein values indicative of temperature and flow rate of thermal energy exchange medium at the single supply line and the single return line are unknown to the data-driven model. Although three separate lines are shown between the thermal network and the "unmonitored" heat receiving units, for both supply and return, respectively, these lines are bundled together in the modelling. The method includes providing an input parameter set to a trained machine learning model system which is configured to output at least one prediction value, the at least one prediction value including a value indicative of a property of the thermal energy exchange system, and wherein the input parameter set includes at least a value indicative of a temperature of thermal energy exchange medium supplied by the thermal energy supply unit via the primary supply line.

In this exemplary embodiment, also multiple optional "monitored" heat receiving units are shown. The connections are modelled separately, without bundling as for the "unmonitored" heat receiving units.

For supply temperature control, the value of the supply temperature may be controlled in order to reach a certain objective. For example, a supply temperature minimization can be carried out wherein the supply temperature is controlled with an objective to get the supply temperature as low as possible, subjected to constraints of the receiving units (e.g. consumer units such as buildings). Other supply temperature optimization can also be carried out, for example based on the heat load of the heat supply unit(s).

It will be appreciated that the method may include computer implemented steps. All above mentioned steps can be computer implemented steps. Embodiments may comprise computer apparatus, wherein processes performed in computer apparatus. The invention also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program. For example, the carrier may comprise a storage medium, such as a ROM, for example a semiconductor ROM or hard disk. Further, the carrier may be a transmissible carrier such as an electrical or optical signal which may be conveyed via electrical or optical cable or by radio or other means, e.g. via the internet or cloud.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The term "and/or" includes any and all combinations of one or more of the associated listed items. The mere fact that certain measures are recited in mutually different claims does not indicate that a combination of these measures cannot be used to an advantage.

List of Symbols

| | |
|---|---|
| $c_{\mathrm{p}}$ | Specific heat capacity of the heating medium (J.kg$^{-1}$.K$^{-1}$) |
| $F_{\mathrm{p,0}}$ | Total primary volumetric flow rate of lumped unmonitored connections (m$^3$.s$^{-1}$) |
| $F_{\mathrm{p,1}}$ | Primary volumetric flow rate of connection 1 (m$^3$.s$^{-1}$) |
| $F_{\mathrm{s,hs}}$ | Secondary volumetric flow rate of heat supply unit (m$^3$.s$^{-1}$) |
| $f_{\mathrm{rt}}$ | Regressor for the heat production site return temperature |
| $f_{\mathrm{st},i}$ | Regressor the the primary-side supply temperature of connection i |
| $f_{\mathrm{ufr}}$ | Regressor for the unmonitored flow rate |

$h_d$      Hour of the day

$k$      Discrete time (step) (-)

$m_h$      Minute of the hour

$\dot{m}_{p,0}$      Total primary mass flow rate of lumped unmonitored connections (kg.s$^{-1}$)

$\dot{m}_{p,1}$      Primary mass flow rate of connection 1 (kg.s$^{-1}$)

$\dot{m}_{s,hs}$      Secondary mass flow rate of heat supply unit (kg.s$^{-1}$)

$N_c$      Number of monitored connections (-)

$N_p$      Number of past time steps used in the district heating network regression models (-)

$T_{o,fc}$      Outdoor temperature forecast (K or °C)

$T_{pr,1}$      Primary return temperature of connection 1 (K or °C)

$T_{ps,1}$      Primary supply temperature of connection 1 (K or °C)

$T_{sr,hs}$      Secondary return temperature of heat supply unit (K or °C)

$T_{ss,hs}$      Secondary supply temperature of heat supply unit (K or °C)

## Claims

1. A computer implemented method of characterizing thermal energy distribution in a thermal energy exchange system using a data-driven model, the thermal energy exchange system comprises a thermal energy supply unit configured to supply heating/cooling, and a plurality of receiving units configured to consume heating/cooling supplied by said thermal energy supply unit, wherein the thermal energy supply unit is connected to a primary supply line through which thermal energy exchange medium flows from the thermal energy supply unit towards the plurality of receiving units, wherein the thermal energy supply unit is connected to a primary return line through which thermal energy exchange medium from the plurality of receiving units flows towards the thermal energy supply unit, wherein connections of at least a subset of multiple receiving units to the primary supply line and the primary return line are modelled as respectively a single supply line and a single return line, wherein values indicative of temperature and flow rate of thermal energy exchange medium at the single supply line and the single return line are unknown to the data-driven model, wherein the method includes providing an input parameter set to a trained machine learning model system which is configured to output at least one prediction value, the at least one prediction value including a value indicative of a property of the thermal energy exchange system, and wherein the input parameter set includes at least a value indicative of a temperature of thermal energy exchange medium supplied by the thermal energy supply unit via the primary supply line.

2. The method according to claim 1, wherein the value indicative of the property of the thermal energy exchange system is at least one of:

   a value indicative of a return temperature of thermal energy exchange medium provided to the thermal energy supply unit via the primary return line;
   a value indicative of a flow rate of thermal energy exchange medium at the single supply line, at the single return line, at the primary supply line and/or at the primary return line; or
   a value that is calculated based on said return temperature and/or said flow rate.

3. The method according to claim 1 or 2, wherein the input parameter set includes a value related to a heat load of the receiving units.

4. The method according to any of the preceding claims, wherein the input parameter set includes a value indicative of time, such as the time of the day.

5. The method according to any of the preceding claims, wherein the input parameter set includes a value indicative of the weather, such as an outdoor temperature.

6. The method according to any one of the preceding claims, wherein the system is provided with one or more further receiving units having individual supply and return lines connected to respectively the primary supply and return lines, wherein a temperature and/or a flow rate of thermal energy exchange medium at said individual supply and return lines are known to the model.

7. The method according to any one of the preceding claims, wherein the at least one prediction value further includes a value indicative of a supply temperature of thermal energy exchange medium at the individual supply lines of the further receiving units.

8. The method according to any one of the preceding claims, wherein the input parameter set includes at least one of:

   a value indicative of a flow rate of thermal energy exchange medium at the individual supply and/or return lines of the further receiving units;
   a value indicative of the flow rate of thermal energy exchange medium at the primary supply line and/or the primary return line; or
   a value indicative of a return temperature at the individual supply and/or return lines of the further receiving units.

9. The method according to any one of the preceding claims, wherein the flow rate of thermal energy exchange medium at the primary supply line and/or the primary return line is calculated based on the value indicative of the flow rate of thermal energy exchange medium at the single supply line and/or at the single return line.

10. The method according to any one of the preceding claims, wherein one or more previous prediction values are provided in the input parameter set.

11. The method according to any one of the preceding claims, wherein the value indicative of the temperature of thermal energy exchange medium supplied by the thermal energy supply unit via the primary supply line is indirectly measured using a measured temperature of thermal energy exchange medium in individual supply lines of the further receiving units.

12. The method according to any one of the preceding claims, wherein the input parameter set includes a value indicative of heat load of the further receiving units, flow rate at the further receiving units and/or return temperature of the further receiving units.

13. A system for characterizing thermal energy distribution in a thermal energy exchange system using a data-driven model, the thermal energy exchange system comprises a thermal energy supply unit configured to supply heating/cooling, and a plurality of receiving units configured to consume heating/cooling supplied by said thermal energy supply unit, wherein the thermal energy supply unit is connected to a primary supply line through which thermal energy exchange medium flows from the thermal energy supply unit towards the plurality of receiving units, wherein the thermal energy supply unit is connected to a primary return line through which thermal energy exchange medium flows from the plurality of receiving units towards the thermal energy supply unit, wherein connections of at least a subset of multiple receiving units to the primary supply line and the primary return line are modelled as respectively a single supply line and a single return line, wherein values indicative of temperature and flow rate of thermal energy exchange medium at the single supply line and the single return line are unknown to the data-driven model, wherein the system includes a processor configured to providing an input parameter set to a trained machine learning model system which is configured to output at least one prediction value, the at least one prediction value including a value indicative of a property of the thermal energy exchange system, and wherein the input parameter set includes at least a value indicative of a temperature of thermal energy exchange medium supplied by the thermal energy supply unit via the primary supply line.

14. A computer implemented method of controlling a supply temperature of the thermal energy exchange system, wherein at least one prediction value associated to the thermal energy exchange system is predicted using the method according to any one of the preceding claims 1-12, and wherein control of the supply temperature of the thermal energy exchange system is performed based on predetermined target objectives and the at least one prediction value.

15. A computer implemented method of controlling a heat load of one or more further receiving units, wherein at least one prediction value associated to the thermal energy exchange system is predicted using the method according to any of the preceding claims 6-12, and wherein control of the heat load of one or more further receiving units is performed based on predetermined target objectives and the at least one prediction value.

FIG 1

FIG 2

EP 4 322 076 A1

Europäisches
Patentamt
European
Patent Office
Office européen
des brevets

# EUROPEAN SEARCH REPORT

Application Number

EP 22 19 0030

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/129800 A1 (VITO NV [BE]) 4 July 2019 (2019-07-04) * the whole document * | 1-15 | INV. G06Q10/04 G05B13/02 G05D23/00 |
| A | EP 3 343 717 A1 (VITO NV [BE]; NODA INTELLIGENT SYSTEMS AB [SE]) 4 July 2018 (2018-07-04) * paragraph [0008]; figures 1-4 * | 1-15 | G06N20/00 G06Q50/06 |
| A | EP 3 343 128 A1 (VITO NV [BE]) 4 July 2018 (2018-07-04) * paragraph [0032] – paragraph [0053] * | 1-15 | |
| A | US 2016/146491 A1 (ETTL MARKUS R [US] ET AL) 26 May 2016 (2016-05-26) * abstract; figure 1A * | 1-15 | |
| A | US 2009/099667 A1 (SEKIAI TAKAAKI [JP] ET AL) 16 April 2009 (2009-04-16) * abstract; figure 1 * | 1-15 | |
| A | EP 4 024 279 A1 (SIEMENS AG [DE]) 6 July 2022 (2022-07-06) * paragraph [0007] – paragraph [0021] * | 1-15 | TECHNICAL FIELDS SEARCHED (IPC) G06Q G06N |
| A | EP 3 118 783 A1 (GEN ELECTRIC [US]) 18 January 2017 (2017-01-18) * abstract; figure 2 * | 1-15 | G05D G05B |

The present search report has been drawn up for all claims

| Place of search | Date of completion of the search | Examiner |
|---|---|---|
| Munich | 13 January 2023 | Weidmann, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

17

## ANNEX TO THE EUROPEAN SEARCH REPORT
## ON EUROPEAN PATENT APPLICATION NO.

EP 22 19 0030

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2023

| Patent document cited in search report | | | Publication date | Patent family member(s) | | | Publication date |
|---|---|---|---|---|---|---|---|
| WO 2019129800 | A1 | | 04-07-2019 | EP | 3732402 | A1 | 04-11-2020 |
| | | | | WO | 2019129800 | A1 | 04-07-2019 |
| EP 3343717 | A1 | | 04-07-2018 | CN | 110178280 | A | 27-08-2019 |
| | | | | DK | 3516750 | T3 | 26-07-2021 |
| | | | | EP | 3343717 | A1 | 04-07-2018 |
| | | | | EP | 3516750 | A1 | 31-07-2019 |
| | | | | KR | 20190102237 | A | 03-09-2019 |
| | | | | KR | 20220084184 | A | 21-06-2022 |
| | | | | PL | 3516750 | T3 | 17-01-2022 |
| | | | | RU | 2019120563 | A | 29-01-2021 |
| | | | | US | 2019324411 | A1 | 24-10-2019 |
| | | | | WO | 2018122273 | A1 | 05-07-2018 |
| EP 3343128 | A1 | | 04-07-2018 | EP | 3343128 | A1 | 04-07-2018 |
| | | | | EP | 3563096 | A1 | 06-11-2019 |
| | | | | JP | 2020503829 | A | 30-01-2020 |
| | | | | US | 2019318281 | A1 | 17-10-2019 |
| | | | | WO | 2018122214 | A1 | 05-07-2018 |
| US 2016146491 | A1 | | 26-05-2016 | US | 2016146491 | A1 | 26-05-2016 |
| | | | | US | 2016146493 | A1 | 26-05-2016 |
| US 2009099667 | A1 | | 16-04-2009 | CN | 101379447 | A | 04-03-2009 |
| | | | | JP | 4573783 | B2 | 04-11-2010 |
| | | | | JP | 2007241624 | A | 20-09-2007 |
| | | | | US | 2009099667 | A1 | 16-04-2009 |
| | | | | WO | 2007102269 | A1 | 13-09-2007 |
| EP 4024279 | A1 | | 06-07-2022 | CN | 114503120 | A | 13-05-2022 |
| | | | | EP | 4024279 | A1 | 06-07-2022 |
| | | | | US | 2022358268 | A1 | 10-11-2022 |
| | | | | WO | 2021062753 | A1 | 08-04-2021 |
| EP 3118783 | A1 | | 18-01-2017 | BR | 102016016424 | A2 | 24-01-2017 |
| | | | | CN | 106351793 | A | 25-01-2017 |
| | | | | EP | 3118783 | A1 | 18-01-2017 |
| | | | | US | 2017016430 | A1 | 19-01-2017 |

EPO FORM P0459

For more details about this annex : see Official Journal of the European Patent Office, No. 12/82